(19) Europäisches Patentamt
European Patent Office
Office européen des brevets

(11) **EP 2 016 688 B1**

(12) **EUROPEAN PATENT SPECIFICATION**

(45) Date of publication and mention
of the grant of the patent:
**16.02.2011 Bulletin 2011/07**

(21) Application number: **07733630.3**

(22) Date of filing: **23.04.2007**

(51) Int Cl.:
*H04B 7/10* (2006.01)     *H01Q 9/00* (2006.01)

(86) International application number:
**PCT/GB2007/050208**

(87) International publication number:
**WO 2007/132260 (22.11.2007 Gazette 2007/47)**

(54) **QUAD POLAR TRANSMISSION**

VIERPOLIGE ÜBERTRAGUNG

TRANSMISSION QUADRIPOLAIRE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **11.05.2006 GB 0609310**

(43) Date of publication of application:
**21.01.2009 Bulletin 2009/04**

(73) Proprietor: **ROKE MANOR RESEARCH LIMITED
Romsey,
Hampshire SO51 0ZN (GB)**

(72) Inventor: **WALES, Stephen William
Salisbury Wiltshire SP2 9BG (GB)**

(74) Representative: **Thompson, Andrew John et al
Withers & Rogers LLP
Goldings House
2 Hays Lane
London
SE1 2HW (GB)**

(56) References cited:
**WO-A-02/054626    US-B1- 7 006 804**

- **DAS N K ET AL: "An experiment on MIMO system
having three orthogonal polarization diversity
branches in multipath-rich environment"
VEHICULAR TECHNOLOGY CONFERENCE,
2004. VTC2004-FALL. 2004 IEEE 60TH LOS
ANGELES, CA, USA 26-29 SEPT. 2004,
PISCATAWAY, NJ, USA,IEEE, 26 September 2004
(2004-09-26), pages 1528-1532, XP010786880
ISBN: 0-7803-8521-7**

**Description**

The present invention relates to improved methods and apparatus for transmitting multiple signals on a single frequency, particularly for communications over fixed wireless point-to-point communications links. Such fixed links include radio and microwave communication arrangements which communicate on a line-of-sight arrangement between transmit and receive antennas. Examples include communications between mobile telephone masts and their networks, and dedicated point-to-point links between buildings. Such fixed links may be used as an alternative to an optic fibre path, in situations where installation of an optic fibre link would be impractical, for example due to inhospitable terrain or a temporary nature of the required link. The present invention may, however, be applied to any point-to-point fixed link.

"MIMO" is an abbreviation for "Multiple In, Multiple Out". It signifies a communications arrangement in which multiple signals can be transmitted and received over a single communications link on a single frequency. This is typically achieved by use of multiple transmit antennas, and multiple receive antennas, and provides improved spectral efficiency as compared to more conventional arrangements where only one signal could be transmitted on a given link at a given frequency. Certain examples will now be described.

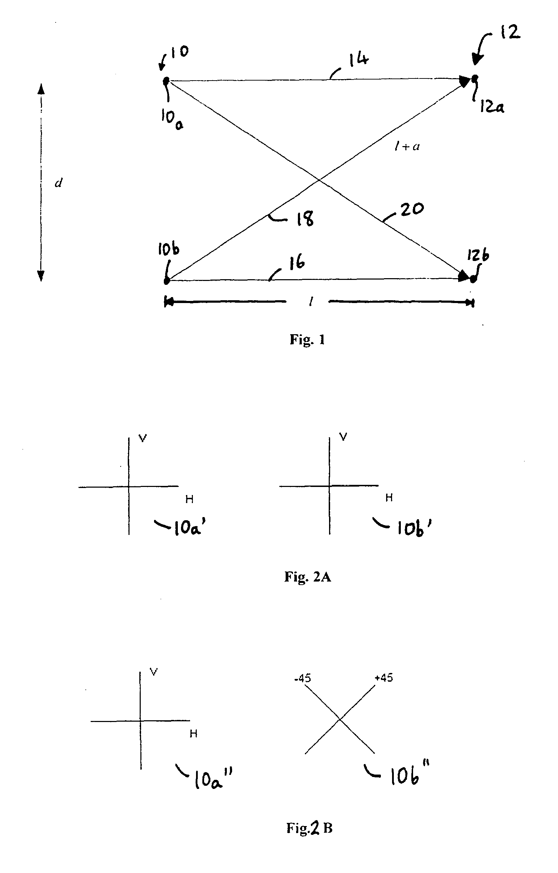

Fig. 1 schematically illustrates a MIMO communications arrangement of the prior art. A fixed link communication arrangement comprises a pair of antennas 10a and 10b at a transmitter location 10, and a pair of antennas 12a, 12b at a receiver location 12. Typically, each pair of antennas would be spaced by a distance d in a direction orthogonal to a line of sight between locations 10, 12. Typically, both antenna pairs would be vertically spaced; alternatively, both antenna pairs would be horizontally spaced. Arrangements in which one antenna pair is horizontally spaced and the other antenna pair is vertically spaced are possible, but are not presently preferred. Arrangements in which the spacing of the antennas of each pair is neither vertical nor horizontal, but intermediate, are also possible.

In reality, each of the locations 10, 12, will typically provide both receive and transmit functions, but the functions are separated for the purposes of the present explanation.

The direct path length between the locations is shown as *l*, and would normally be in the range of several hundreds of metres to several kilometres. The separation between the two antennas at each location is shown as *d*. This would normally be of the order of a few metres. Clearly, Fig. 1 is not drawn to scale, but some dimensions are exaggerated for the purposes of explanation.

Four signal paths 14, 16, 18, 20 are shown, assuming that the antennas at each location are spaced in the same direction, such as vertically or horizontally. Paths 14, 16 are co-spatial paths: antenna 10a is transmitting to corresponding antenna 12a, and antenna 10b is transmitting to corresponding antenna 12b. The length of these paths is equal to *l*, the distance between the locations. On the other hand, cross-spatial path 18 results from antenna 10b transmitting to opposite antenna 12a, and cross-spatial path 20 results from antenna 10a transmitting to opposite antenna 12b. These paths are longer in length, indicated in Fig. 1 as *l*+a, such that $(l+a)^2 = l^2 + d^2$. The difference in path length, a, will in reality be very small. Taking an example in which d is 1 m and *l* is 1000m, we find that:

$$(l+a)^2 = 1,000,001\,\mathrm{m};$$

$$l+a = 1000.0005\,\mathrm{m}$$

$$a = 0.5\,\mathrm{mm}.$$

This difference in path length *a* will cause a difference in phase of received signals. For example, if the communications in question use a wavelength λ of 0.0020m, then this difference in path length *a* will cause difference in the phase of signals received at the antennas 12a, 12b of one quarter wavelength (λ/4). With suitable encoding, four different signals may be transmitted by the arrangement of Fig. 1. In a typical arrangement, one signal is transmitted on each of the paths 14, 16, 18, 20. Of course, each antenna will receive all of the transmitted signals, but phase differences can be used to distinguish between them at each antenna.

A first co-spatial path 14 travels from antenna 10a to antenna 12a. A first cross-spatial path 18 travels from antenna 10b to antenna 12a. Assuming, for present purposes only, that signals on paths 14, 18 are transmitted in phase, then the signal on first cross-spatial path 18 will phase lag the signal on first co-spatial path 14 at the receiving antenna 12a, by an amount corresponding to the difference in path lengths, *a*. In the example mentioned above, this may be one quarter wavelength (λ/4), corresponding to a 90° phase difference. By performing standard decoding operations, well known to those skilled in the art, the signals on first co-spatial path 14 and on the first cross-spatial path 18 may be separated and decoded to extract respective signals.

Similarly, a second co-spatial path 16 travels from antenna 10b to antenna 12b. A second cross-spatial path 20 travels from antenna 10a to antenna 12b. Assuming, for present purposes only, that signals on paths 16, 20 are transmitted in phase, then the signal on second cross-spatial path 20 will lag behind the signal on first co-spatial path 16 at the receiving antenna 12b, by an amount corresponding to the difference in path lengths, $a$. In the example mentioned above, this may be one quarter wavelength ($\lambda/4$), corresponding to a 90° phase difference. By performing standard decoding operations, well known to those skilled in the art, the signals on the second co-spatial path 16 and on the second cross-spatial path 20 may be separated and decoded to extract respective further signals.

The attainable phase difference at the receive antennas 12a, 12b will of course depend on the wavelength/ frequency of the transmission, the separation $d$ between the transmit antennas, and the separation between the receive antennas, which is conveniently, but not necessarily, fixed at the same separation $d$ as between the transmit antennas. In order to keep the antenna arrangement manageable, the separation d between antennas is preferably kept relatively small, for example in the region of 1m. However, performance of the cross-channel encoding and decoding is improved by having a large phase difference between co-spatial and cross-spatial signals. In order to obtain a reasonably large phase difference with such a small physical separation $d$, a relatively high frequency/short wavelength is required. For example, 38GHz is commonly used for fixed point-to-point links, which provides a wavelength of about 0.008m. 7.5GHz is also commonly used for fixed point-to-point links, with a wavelength of about 0.04m. Even higher frequencies are likely to experience atmospheric effects which degrade the transmission.

While the above description assumes that the difference in path length $a$ is identical for first and second co-spatial channels 18, 20, this need not be the case. For example, if the antennas 10a and 10b are separated in a direction parallel to the line of sight between locations 10, 12, in addition to being separated in a direction orthogonal to the line of sight between locations 10, 12 then the difference in path length will be different for first and second cross-spatial channels 18, 20. This need not be a problem, provided that the encoding and/or decoding operations take this into account.

Such MIMO communication arrangements have in the past been applied to mobile telephony, for example in communications between base stations and the network, and to wireless LAN networks. Unlike certain other communications arrangements, MIMO communications paths work best with a significant amount of scatter. The diversity introduced by a significant amount of scatter has been found to assist the process of separating the different channels from one another.

In the point-to-point links as described above, very little scattering occurs. This is due to the fact that such point-to-point links are arranged on a line of sight, so the scope for multiple paths and reflection and diffraction around objects is minimal. Some scattering may be provided by multiple paths introduced over long-distance point-to-point fixed links by so-called "ducting", where a gradient in atmospheric refractive index causes the bending of radio or microwave paths, so providing further paths of greater length than the direct line-of-sight path. Point-to-point links have therefore been regarded as a challenging context for the use of MIMO communication arrangements.

As in many branches of communications, it is presently desired to increase the quantity of data which can be transmitted through a point-to-point fixed link, without a proportional increase in cost and size of the required equipment.

The preceding description illustrates how four signals, including two cross-spatial signals, may be transmitted on four paths between pairs of antennas as illustrated in Fig. 1. These numbers may easily be doubled, to eight signals, including four cross-spatial signals, by replicating the arrangement of Fig. 1 in a second polarisation. This is most simply achieved by using dual-polarised antennas for each of the transmit and receive antennas 10a, 10b, 12a, 12b, each providing or receiving both horizontal and vertical polarisation signals. Transmissions of a certain polarisation will be picked up by the receive antenna of the corresponding polarisation, with a tolerable level of interference from signals of the other polarisation, referred to as cross-polarisation interference. Each polarisation will provide an arrangement similar to that illustrated in Fig. 1. Fig. 2A schematically shows a pair of transmit antennas 10a', 10b', suitable for use as transmit antennas in such an arrangement. Each transmit antenna comprises a horizontally polarised antenna and a vertically polarised antenna. A similar arrangement is made for the receive antennas. Such dual polarisation antennas may be embodied as a dish antenna, as will be apparent to those skilled in the relevant art. Use of such dual polarisation cross-channel MIMO communications is referred to as "dual-dual polar" communication.

Recently, two papers have also considered the possibility of transmitting more than two co-channel transmissions per link. In P. Coulton, C. Khirallah and S. Qazi, "Increasing the Spectral Efficiency in Fixed Point-to-Point Microwave Radio System using Multiple Antenna Arrays", IEE DSP Enabled Radio Colloquium, September 2003, two dual polar transmissions were considered with spatial separation between the two antennas, achieving four co-channel transmissions per link. Cross-polar and Cross-spatial interference were considered along with a least-mean-squares based interference cancelling receiver. Levels of cross-polar interference and cross-spatial interference considered in the paper were 28dB and 22dB respectively. To achieve the quoted levels of cross-spatial interference in a practical link would necessitate the antennas to be widely separated at least equal to the product of the antenna beam width and the link distance. As an example employing antennas with a 1° 3dB beam width in azimuth, then the separation required to achieve 6dB cross-spatial isolation on a 10km link is a rather impractical 174m.

Another paper, S. Calabro, B. Lankl and G. Sebald, "Multiple Co-Polar Co-Channel Point-to-Point Radio Transmission", AEU Int. J. Electronics and Communications, Vol. 58, 2004, pp51-57, has considered a more practical scheme, again using a spatially separated pair of antennas transmitting dual polarised signals, except in this case a high level of cross-spatial interference is now considered, and the phase difference of the cross-spatial paths is selected to maximise the capacity of this MIMO system.

Such MIMO point-to point links, including the dual-dual polarised links, suffer from the problem that a relatively large phase difference is required for effective decoding, and that such a large phase difference requires a large separation d between antennas at the transmit 10 and receive 12 locations. Alternatively, if the separation $d$ is reduced, the phase difference between co-spatial and cross-spatial paths will reduce, leading to more difficulties in decoding the received transmissions.

United States patent 7006804 describes high-speed two-way point-to-point transmission. Pairs of dual polar antennas are used, one for transmission and one for reception.

The present invention provides methods and apparatus which enable improved MIMO communication methods to be employed in point-to-point fixed links. The present invention allows effective MIMO communication with reduced phase difference between co-spatial and cross-spatial paths, allowing antennas to be situated with reduced spacing $d$, or reducing the frequency of operation of antennas with a given spacing $d$, while maintaining channel capacity.

The present invention accordingly provides methods and apparatus as defined in the appended claims.

The above, and further, objects, characteristics and advantages of the present invention will become more apparent from the following description of certain embodiments thereof, in conjunction with the appended claims, wherein:

Fig. 1 shows a known antenna arrangement for MIMO communications over a fixed link;

Fig. 2A schematically represents two antennas suitable for use as a pair of transmit antennas, or as a pair of receive antennas, in dual-dual polar MIMO communications as illustrated in Fig. 1;

Fig. 2B schematically represents two antennas suitable for use as a pair of transmit antennas, or as a pair or receive antennas, in quad polar MIMO communications as illustrated in Fig. 1, according to the present invention;

Fig. 3 shows MIMO and zero-forcing capacities for dual-dual polar transmission and quad polar transmission against the relative phase between co-spatial and cross-spatial paths;

Fig. 4 shows required antenna separation versus link length for various phase differences and at two common fixed link frequencies, according to embodiments of the present invention;

Fig. 5 shows block diagram of a simulation performed to demonstrate the effectiveness of certain embodiments of the present invention;

Fig. 6 shows a block diagram of 4×4 MIMO decision feedback equaliser (MIMO-DFE) as used in the simulation of Fig. 5; and

Fig. 7 shows static channel simulation results as obtained from the simulation of Figs. 5 and 6.

The present invention provides methods and apparatus which enable improved MIMO communication, allowing several signals to be transmitted and received on a single frequency, over a fixed point-to-point link, with antennas separated by a limited separation $d$, employing different polarisation of signals over transmission paths.

The present invention provides a novel type of antenna arrangement for use in a fixed point-to-point link, this antenna arrangement enabling effective MIMO encoding and decoding of multiple signals on a fixed point-to-point link, while maintaining a reasonably small physical separation between antennas at the transmit location and the receive location. In particular, the antenna arrangement of the invention is arranged to provide sufficient phase shift between the different signals transmitted on any one frequency, while limiting the required separation between antennas.

The present invention improves upon the dual-dual polar MIMO transmission method described above in relation to Figs. 1 and 2A. In particular, one of the two transmit antennas and one of the two receive antennas are oriented so that that antenna transmits orthogonal +45° and - 45° polarisations, while the other antenna transmits orthogonal vertical and horizontal polarisations. This configuration is referred to as quad polar transmission, as four different polarisations are involved. The antenna configurations used at the receiver are the same as used at the transmitter and are depicted in Figure 2B.

A pair of quad polar antennas 10a" and 10b" are illustrated in Fig. 2B. These antennas are suitable for use as transmission antennas 10a, 10b in an arrangement as shown in Fig. 1. The transmit antennas do not simply provide horizontal and vertical polarisation, as was the case with dual-dual polarisation. Instead, one antenna, 10a", provides horizontal and vertical polarisation, while the other antenna 10b", provides two orthogonal polarisations each intermediate between the horizontal and vertical polarisations-for example, +45° and -45° polarisations as compared to the polarisations of the other antenna. Similar arrangements will be made for receive antennas 12a, 12b, such that the horizontal and vertical polarised antennas are co-spatial, and the +45° and -45° polarised antennas are co-spatial.

Use of such quad polar antennas allows reduced physical separation d between the antennas. This is because the quad polar arrangement provides acceptable channel differentiation with reduced phase difference, due to ease of removing cross-channel interference. In a dual-dual antenna arrangement such as in Fig. 2A, the vertically polarised transmissions from the antennas 10a' and 10b' interfere with each other, but do not interfere with the horizontally polarised transmissions to an appreciable extent. Similarly, the horizontally polarised transmissions from the antennas 10a' and 10b' interfere with each other, but do not interfere with the vertically polarised transmissions to an appreciable extent. Using the quad polar arrangement, each of the +45° and -45° polarisations interfere equally with both the horizontal and vertical polarisation of the other antenna. Similarly, each of the horizontal and vertical polarisations interferes equally with both the +45° and -45° polarisations of the other antenna. This makes it easier to detect the interfering signals and to cancel them out, by methods known in themselves to those skilled in the art. This in turn means that a reduced phase shift, and so a reduced difference in path length $a$ can be used. Path length differences $a$ corresponding to $\lambda/8$ or $\lambda/16$ have been found to be sufficient. The effect of this is that the antenna array at transmit 10 and receive 12 locations may be made smaller, as the antennas may be placed closer together by reducing the separation $d$.

The use of +45° and -45° polarisations of the second antenna 10b" with respect to the orthogonal polarisations of the first antenna 10a" is not necessary, as other intermediate orthogonal polarisations may be used. For example, an arrangement of +30° and -60° polarisations would provide benefits over the dual-dual arrangement of Fig. 2A, since the +30° and -60° polarisations would interfere with vertical and horizontal polarisations, although not to equal extents. Advantageous operation according to the invention is believed to be possible at least over the range of orthogonal polarisations from +22.5° and -67.5° to +67.5° and -22.5° polarisations, as compared to the orthogonal polarisations of the first antenna 10a".

The recited orthogonal polarisations defined by orthogonally arranged transmit and receive antennas may in some arrangements be replaced with non-orthogonal polarisations. For example, one antenna may be provided with polarisations of +30° and -30° as compared to the vertical. However, it is presently believed that such arrangements would have reduced performance.

Assuming line of sight propagation with no disturbance due to the atmosphere, and for antenna separations $d$ much less than the path length $l$, there will be negligible antenna discrimination for the cross-spatial paths because the angle of incidence will be within the main lobe of the antenna. In the above example, with an antenna separation $d$ of 1m, and a path length $l$ of 1000m, the angle between co-spatial path 14 and cross-spatial path 20 would be less than 0.06°. Even with a narrow 1° antenna 3dB bandwidth main lobe, both paths will lie in the central region of the main lobe, and so would not be discriminated by the antenna. The amplitude of signals on the co-spatial and cross-spatial paths will not be significantly distinguished. Consequently, only a phase shift will occur between the co-spatial path and the cross-spatial path.

The channel impulse response matrix under these propagation conditions can then be described by a matrix of complex attenuations, as no time dispersion exists. In the described example, sixteen possible propagation paths exist: from each of the vertical, horizontal, +45° and -45° transmit antennas to each of the vertical, horizontal, +45° and -45° receive antennas. In general each of these sixteen possible propagation paths is characterised by its own amplitude/ attenuation and phase shift. However, making certain assumptions and exploiting symmetries, a simplified model has been obtained.

The following assumptions are made, both for dual-dual and quad polar transmissions:

- Co-Polar, Co-Spatial coupling (amplitude and phase shift characteristics for transmission between corresponding antennas in a corresponding polarisation) is independent of position and polarisation;
- Cross-Polar Co-Spatial coupling (amplitude and phase shift characteristics for transmission between corresponding antennas in opposite polarisations) is symmetric for orthogonal polarisations;
- Co-Polar Cross-Spatial coupling (amplitude and phase shift characteristics for transmission between opposite antennas in a corresponding polarisation) is symmetric; and
- Cross-Polar Cross-Spatial coupling (amplitude and phase shift characteristics for transmission between opposite antennas in opposite polarisations) is symmetric for orthogonal polarisations.

Given the above assumptions, the channel impulse response may be calculated, as shown below in Equation [1], showing the channel impulse response of each of the sixteen possible propagation paths mentioned above. As a result of the assumed symmetries, only four different values are included.

$$\mathbf{H} = \begin{vmatrix} 1-\gamma_0 & \gamma_0 e^{j\beta_0} & (1-\gamma_1)e^{j\alpha} & \gamma_1 e^{j(\alpha+\beta_1)} \\ \gamma_0 e^{j\beta_0} & 1-\gamma_0 & \gamma_1 e^{j(\alpha+\beta_1)} & (1-\gamma_1)e^{j\alpha} \\ (1-\gamma_1)e^{j\alpha} & \gamma_1 e^{j(\alpha+\beta_1)} & 1-\gamma_0 & \gamma_0 e^{j\beta_0} \\ \gamma_1 e^{j(\alpha+\beta_1)} & (1-\gamma_1)e^{j\alpha} & \gamma_0 e^{j\beta_0} & 1-\gamma_0 \end{vmatrix} \qquad [1]$$

In this matrix,

$1-\gamma_0$ is the co-polar, co-spatial channel impulse response;

$\gamma_0 e^{j\beta_0}$ is the cross-polar, co-spatial channel impulse response;

$(1-\gamma_1)e^{j\alpha}$ is the co-polar, cross-spatial channel impulse response; and

$\gamma_1 e^{j(\alpha+\beta_1)}$ is the cross-polar, cross-spatial channel impulse response,

where $\alpha$ is the phase shift of the cross-spatial path relative to the co-spatial path, and $\beta_0$ the phase shift induced by cross-polar coupling (that is, reception of a signal of one polarity on the antenna of opposite polarity) from the same antenna received via the co-spatial path. The amplitude of cross-polar coupling between different polarisations received via the co-spatial path is denoted by $\gamma_0$. The amplitude and phase shift due to cross-polar coupling received via the cross-spatial paths are given by $\gamma_1$ and $\beta_1$, respectively. For embodiments where a horizontal or vertical antenna transmits to a +45° or -45° antenna, an allocation of which polarisation is "co-polar" and which is "cross-polar" must be made.

For dual-dual polar transmission the parameter $\gamma_0=\gamma_1$, whilst for quad-polar transmission $\gamma_1 = \dfrac{1}{\sqrt{2}} - \gamma_0$.

To assess the optimum phase shift between the cross-spatial path and the co-spatial path for the dual-dual polar and the quad polar arrangements, the theoretical capacity of the two transmission schemes may be evaluated as a function of $\alpha$, the phase shift of the cross-spatial path relative to the co-spatial path.

The capacity of the transmission scheme assuming a zero-forcing interference canceller is employed at the receiver has been derived in S. Calabro, B. Lankl and G. Sebald, "Multiple Co-Polar Co-Channel-Point-to-Point Radio Transmission", AEÜ Int. J. Electronics and Communications, Vol. 58, 2004, pp51-57 and is reproduced in Equation [2].

$$C_{ZF} = \sum_i \log_2\left( \det\left( \mathbf{I} + \frac{\rho}{\sum_j |q_{ij}|^2} \right) \right) \qquad [2]$$

Another expression of data capacity is that for the MIMO channel given in E. Teletar, "Capacity of Multi-Antenna Gaussian Channels", European Transactions on Telecommunications, Vol. 10, 1999, pp585-595 and reproduced in Equation [3]. This represents the ideal capacity which it is possible to transmit over the link:

$$C_{MIMO} = \log_2\left( \det\left( \mathbf{I} + \rho \mathbf{H}^H \mathbf{H} \right) \right) \qquad [3]$$

In equations [2] and [3], p in each case is the per antenna signal to noise ratio and $q_{i,j}$ are the zero-forcing interference canceller coefficients obtained from $\mathbf{Q}=\mathbf{H}^{-1}$.

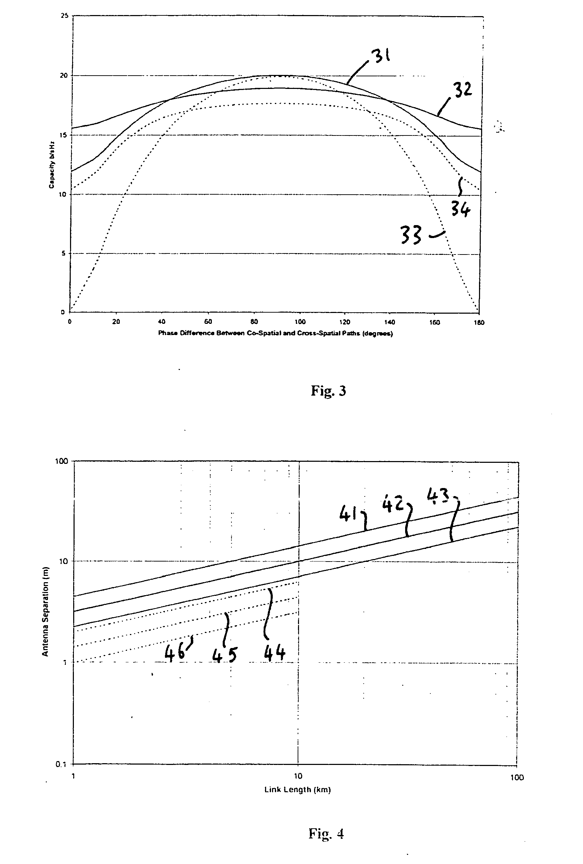

Fig. 3 illustrates MIMO capacity $C_{MIMO}$ and zero-forcing capacity $C_{ZF}$ for dual-dual polar transmission and quad polar transmission versus the relative phase between co-spatial and cross-spatial paths. The MIMO capacities $C_{MIMO}$ represent the theoretical capacity for an ideal receiver in each case, while the zero-forcing capacities $C_{ZF}$ correspond to the capacity which can be realised in practice using a simple practical receiver. Curve 31 shows MIMO capacity $C_{MIMO}$ of a dual-dual polar communications link over a range of phase differences between co-spatial and cross-spatial paths of 0 to 180°, with a signal-to-noise ratio of 12dB and -20dB cross-polar interference in units of bits per second per Hz of bandwidth b/s/Hz. Similarly, curve 32 shows the corresponding MIMO capacity $C_{MIMO}$ of a quad polar communications link, curve 33 shows the corresponding zero forcing capacity $C_{ZF}$ of a dual-dual polar communications link, and curve 34 shows the corresponding zero forcing capacity $C_{ZF}$ of a quad polar communications link.

The results of Fig. 3 show that the optimum phase difference between the cross-spatial path and the co-spatial path is 90° for both dual-dual polar transmission and quad polar transmission. For relative phase shifts of 0° and 180°, the zero-forcing capacity 33 drops to zero for the dual-dual polar transmission but is only reduced from its peak value in the case of quad polar transmission 34. The peak capacity of dual-dual polar transmission 31 is slightly higher than that of quad polar transmission 33. Most significantly, the capacities 32, 34 of quad polar transmission are significantly higher than the corresponding capacities 31, 33 of dual-dual transmission at phase differences below 40° and above 140°.

The actual antenna separations $d$ required to achieve a 90° phase difference ($\lambda$/4 path length difference) between the cross-spatial path and the co-spatial path have been evaluated for typical link lengths $l$ used in the 7.5 and 38GHz bands, and the results plotted in Fig. 4. Also shown in Fig. 4 are the antenna separations required for 45° phase difference ($\lambda$/8 path length difference) and 22.5° phase difference ($\lambda$/16 path length difference).

Line 41 shows required antenna separation d for providing a 90° phase difference ($\lambda$/4 path length difference) between the cross-spatial path and the co-spatial path for link lengths $l$ in the range of 1-100km in the 7.5GHz band.

Line 42 shows required antenna separation $d$ for providing a 45° phase difference ($\lambda$/8 path length difference) between the cross-spatial path and the co-spatial path for link lengths $l$ in the range of 1-100km in the 7.5GHz band.

Line 43 shows required antenna separation $d$ for providing a 22.5 phase difference ($\lambda$/16 path length difference) between the cross-spatial path and the co-spatial path for link lengths $l$ in the range of 1-100km in the 7.5GHz band.

Line 44 shows required antenna separation $d$ for providing a 90° phase difference ($\lambda$/4 path length difference) between the cross-spatial path and the co-spatial path for link lengths $l$ in the range of 1-10km in the 38GHz band.

Line 45 shows required antenna separation d for providing a 45° phase difference ($\lambda$/8 path length difference) between the cross-spatial path and the co-spatial path for link lengths $l$ in the range of 1-10km in the 38GHz band.

Line 46 shows required antenna separation $d$ for providing a 22.5° phase difference ($\lambda$/16 path length difference) between the cross-spatial path and the co-spatial path for link lengths $l$ in the range of 1-10km in the 38GHz band.

For practical purposes, antenna separations of no more than a few metres are desirable. If an upper limit on the antenna separation is set at 3m, then link lengths of 3 to 9km could be supported at 38GHz, depending upon the relative phase required between co-spatial and cross-spatial paths. At 7.5GHz, antenna separations of 10-20m are required for typical link lengths used in this frequency band.

These results assume ideal propagation conditions. In practice, the nature of a propagation path can change due to atmospheric considerations. For example, variations in atmospheric radio refractivity, on both small and large scales, and the presence of hydrometeors (rain) can cause variation of the attenuation and phase shift of each of the propagation paths.

Rain is well known to attenuate microwave signals and to cause cross-polar distortion. Rain is not thought to cause significant phase variation in co-polar cross-spatial paths, and provided that cross-polar coupling remains relatively small then the performance of dual-dual polar transmission should be maintained during rain. Quad polar transmission on the other hand involves high levels of cross-polar cross-spatial coupling (-3dB) and this may lead to some phase variation on cross-polar cross-spatial paths.

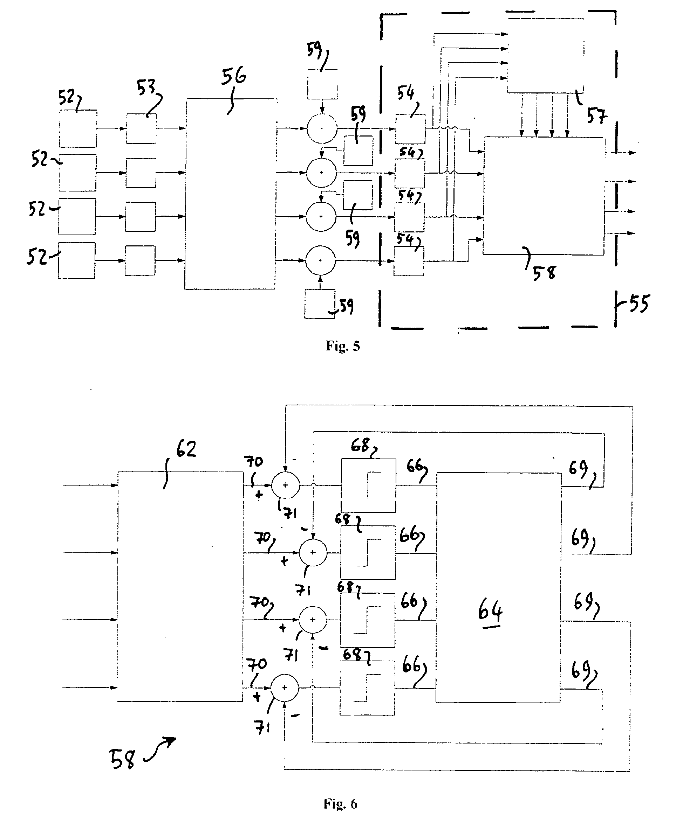

To evaluate the bit error rate performance of the different transmission schemes a simulation has been developed utilising a practical receiver algorithm. A block diagram of the simulation is shown in Fig. 5.

The four channels illustrated represent the vertical, horizontal, +45° and - 45° antennas of the described embodiment of the present invention. Similar simulations could be used to model the four channels represented by the vertical and horizontal polarisations of each of the antennas in a dual-dual transmission. Blocks of sample data are generated for each of the four channels in modulators 52. The blocks are filtered through respective transmit filters 53. The transmit filters apply pulse shaping and define the spectrum of the transmitted signal, to simulate real transmission conditions. The blocks are then processed through a channel model 56, which applies the propagation conditions as defined in the channel impulse response matrix **H**, at equation [1] above. In addition to the complex channel impulse response matrix attenuation model of equation [1], the channel model 56 is capable of incorporating time dispersion effects on all paths. A quantity of white Gaussian noise 59 is added to each channel, to simulate the noise generated within the receiver and received at the antenna terminals. At receiver 55, the channel impulse response coefficients, as defined in equation [1] are estimated using a block least squares channel estimator 57. In one arrangement of the simulation, knowledge of the block of modulated data symbols is assumed. In a practical embodiment, this would not be possible and other algorithms for computation of tap weights would be used. From the channel impulse response estimates calculated by the channel estimator 57, the filter coefficients of a minimum mean square error Decision Feedback Equaliser for the MIMO channel (MIMO-DFE) 58 are calculated, for example by using the method described in N. Al-Dhahir and A.H. Sayed, "The Finite-Length Multi-Input Multi-Output MMSE DFE", IEEE Transactions on Signal Processing, Vol. 48, No. 10, October 2000, pp2921-2935 for obtaining the coefficients.

The MIMO-DFE is one example of a practical receiver which could be used to receive communications according to the present invention. Other known receivers could alternatively be used. A block diagram of the MIMO-DFE 58 for the 4×4 channel, that is, four antennas transmitting to four antennas, is shown in Fig. 6.

In Fig. 6, the MIMO-DFE 58 of Fig. 5 is shown in more detail. It comprises a 4x4 matrix of transversal filters (Forward Filter) 62 that essentially performs most of the cross-spatial and cross-polar interference cancellation, to remove interference between channels and to attempt to remove inter-symbol interference. Decision devices 68 act on incoming decision variables and are used to obtain estimates 66 of the transmitted modulated symbols, which are the outputs of the 4x4 MIMO DFE.

Further cancellation of inter-symbol cross-spatial and cross-polar interference can be performed using a 4×4 matrix of transversal filters of the feedback filter 64 whose inputs 66 are previous symbol decisions from decision devices 68. The decision variables used by decision devices 68 are then modified by subtraction 71 of outputs 69 of the feedback filter 64 from outputs 70 of the forward filter 62.

Residual interference will exist at decision instants and it is possible to consider not just a simple decision device, but also more complex decision devices using serial interference cancellation [for example, as discussed in G.D. Golden, G.J. Foschini, R.A. Valenzuela and P.W. Wolniansky, "Detection Algorithm and Initial Laboratory Results using the V-BLAST Space-Time Communications Architecture", Electronics Letters, Vol. 35, No. 7, January 1999, pp14-15*]*, or the optimum decision device that makes a joint decision considering the residual interference.

Simulation results have been obtained for a 64-bit quadrature amplitude modulation scheme. A static channel model was used, permitting cross-spatial and cross-polar coupling with fixed amplitudes and phase to be modelled.. Time dispersion with variable fade depth and notch frequency is also included.

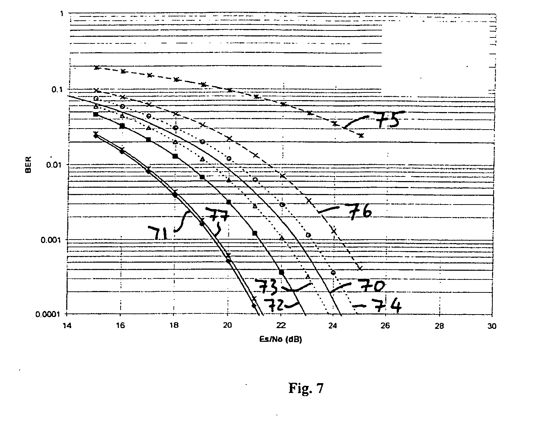

Fig. 7 illustrates static channel simulation results for various communications links, in terms of variation of bit error rate (BER) with signal-to-noise ratio.

Line 70 shows a reference 64-bit quadrature amplitude modulation scheme;

Line 71 shows a dual-dual polar communications link with a phase offset of 90°;

Line 72 shows a quad polar communications link according to the invention, with a phase offset of 90°;

Line 73 shows a quad polar communications link according to the invention, with a phase offset of 45°;

Line 74 shows a dual-dual polar communications link with a phase offset of 45°;

Line 75 shows a dual-dual polar communications link with a phase offset of 22.5°;

Line 76 shows a quad polar communications link according to the invention, with a phase offset of 22.5°; and

Line 77 shows a single polar dual antenna receiver communications link.

Comparing corresponding lines, 71 and 72; 73 and 74; 75 and 76, it is clear that the quad polar transmission method of the present invention presents a significantly reduced bit error rate at reduced phase differences (45° and 22.5°), at the cost of an increased bit error rate at the nominal 90° phase difference. This corresponds to the performance which may have been expected from the graph of Fig. 3.

The present invention accordingly provides improved methods and apparatus for MIMO communications across wireless fixed links, wherein a pair of spaced dual polar antennas are used for transmission, and another such pair are used for reception, wherein orthogonal polarisations of one of each pair of antennas are oriented intermediate between the orthogonal polarisations of the other of each pair of antennas. Improved communications are provided with polarisation offsets between the antennas of each pair in at least the range 22.5° to 67.5°.

**Claims**

1. Apparatus for MIMO communications across a wireless fixed link, comprising a first pair (10) of dual polar antennas, spaced apart in a direction (*d*) orthogonal to the direction (*l*) of the fixed link, and a second such pair (12) for reception, **characterised in that** the polarisations of one dual polar antenna (10a") of each pair (10, 12) of dual polar antennas are oriented intermediate between the polarisations of the other dual polar antenna (10b") of the respective same pair (10).

2. Apparatus according to claim 1 wherein each dual polar antenna is arranged with orthogonal polarisations.

3. Apparatus according to claim 2 wherein polarisation offsets between the orthogonal polarisations of the antennas of each pair is in the range 22.5° to 67.5°.

4. Apparatus according to claim 3 wherein polarisation offsets between the orthogonal polarisations of the antennas of each pair is in the range 30° to 60°.

5. Apparatus according to claim 4 wherein polarisation offsets between the orthogonal polarisations of the antennas of each pair is 45°.

6. A method for MIMO communications across a wireless fixed link, wherein a first pair (10) of dual polar antennas, spaced apart (*d*) in a direction orthogonal to the direction (*l*) of the fixed link, are used for transmission, and a second such pair (12) are used for reception, **characterised in that** polarisations of one dual polar antenna (10a") of each pair (10, 12) of dual polar antennas are oriented intermediate between the polarisations of the other dual polar antenna (10b") of the respective same pair, the method comprising the steps of:

   - transmitting first and second signals with first and second polarisations from a first dual polar antenna (10a") of the first pair (10);
   - transmitting third and fourth signals with third and fourth polarisations from a second dual polar antenna (10b") of the first pair, such that the third and fourth polarisations are oriented intermediate between the first and second polarisations, and first, second, third and fourth signals have a same frequency;
   - receiving first, second, third and fourth signals in the second pair (12) of dual polar antennas;
   - separating the received first, second, third and fourth signals, in accordance with phase and polarisation characteristics of the received signals; and
   - extracting data from the first, second, third and fourth signals.

7. A method according to claim 6 wherein each dual polar antenna is arranged with orthogonal polarisations, such that first and second polarisations are mutually orthogonal, and third and fourth polarisations are mutually orthogonal.

8. A method according to claim 7 wherein polarisation offsets between the orthogonal polarisations of the antennas of each pair is in the range 22.5° to 67.5°.

9. A method according to claim 8 wherein polarisation offsets between the orthogonal polarisations of the antennas of each pair is in the range 30° to 60°.

10. A method according to claim 9 wherein polarisation offsets between the orthogonal polarisations of the antennas of each pair is 45°.


**Patentansprüche**

1. Vorrichtung für MIMO-Kommunikation über einen drahtlosen festen Link, umfassend ein erstes Paar (10) von Dual-Polar-Antennen, die in einer zur Richtung (*l*) des festen Link orthogonalen Richtung (*d*) voneinander beabstandet sind, und ein zweites solches Paar (12) für den Empfang, **dadurch gekennzeichnet, dass** die Polarisationen einer Dual-Polar-Antenne (10a") jedes Paares (10, 12) von Dual-Polar-Antennen intermediär zwischen den Polarisationen der anderen Dual-Polar-Antenne (10b") des betreffenden selben Paares (10) orientiert sind.

2. Vorrichtung nach Anspruch 1, wobei jede Dual-Polar-Antenne mit orthogonalen Polarisationen angeordnet ist.

3. Vorrichtung nach Anspruch 2, wobei Polarisationsverschiebungen zwischen den orthogonalen Polarisationen der Antennen jedes Paares in dem Bereich von 22,5° bis 67,5° liegen.

4. Vorrichtung nach Anspruch 3, wobei Polarisationsverschiebungen zwischen den orthogonalen Polarisationen der Antennen jedes Paares in dem Bereich von 30° bis 60° liegen.

5. Vorrichtung nach Anspruch 4, wobei Polarisationsverschiebungen zwischen den orthogonalen Polarisationen der Antennen jedes Paares 45° betragen.

6. Verfahren für MIMO-Kommunikation über einen drahtlosen festen Link, wobei ein erstes Paar (10) von Dual-Polar-Antennen, die in einer zur Richtung (*l*) des festen Link orthogonalen Richtung beabstandet sind (*d*), für die Übertragung verwendet werden und ein zweites solches Paar (12) für den Empfang verwendet wird, **dadurch gekennzeichnet, dass** Polarisationen einer Dual-Polar-Antenne (10a") jedes Paares (10, 12) von Dual-Polar-Antennen intermediär zwischen den Polarisationen der anderen Dual-Polar-Antenne (10b") des betreffenden selben Paares orientiert werden, wobei das Verfahren die folgenden Schritte umfasst:

   - das Übertragen erster und zweiter Signale mit ersten und zweiten Polarisationen von einer ersten Dual-Polar-Antenne (10a") des ersten Paares (10);
   - das Übertragen dritter und vierter Signale mit dritten und vierten Polarisationen von einer zweiten Dual-Polar-Antenne (10b") des ersten Paares, derart, dass die dritten und vierten Polarisationen intermediär zwischen den ersten und zweiten Polarisationen orientiert sind und die ersten, zweiten, dritten und vierten Signale gleiche Frequenz haben;

- das Empfangen der ersten, zweiten, dritten und vierten Signale in dem zweiten Paar (12) von Dual-Polar-Antennen;
- das Trennen der empfangenen ersten, zweiten, dritten und vierten Signale in Übereinstimmung mit den Phasen- und Polarisationscharakteristiken der empfangen Signale; und
- das Extrahieren von Daten aus den ersten, zweiten, dritten und vierten Signalen.

7. Verfahren nach Anspruch 6, wobei jede Dual-Polar-Antenne mit orthogonalen Polarisationen angeordnet wird, so dass erste und zweite Polarisationen zueinander orthogonal sind und dritte und vierte Polarisationen zueinander orthogonal sind.

8. Verfahren nach Anspruch 7, wobei Polarisationsverschiebungen zwischen den orthogonalen Polarisationen der Antennen jedes Paares in dem Bereich von 22,5° bis 67,5° liegen.

9. Verfahren nach Anspruch 8, wobei Polarisationsverschiebungen zwischen den orthogonalen Polarisationen der Antennen jedes Paares in dem Bereich von 30° bis 60° liegen.

10. Verfahren nach Anspruch 9, wobei Polarisationsverschiebungen zwischen den orthogonalen Polarisationen der Antennen jedes Paares 45° betragen.


**Revendications**

1. Appareil pour des communications MIMO d'un bout à l'autre d'une liaison fixe sans fil, comprenant un premier couple (10) d'antennes polaires doubles, espacées dans une direction (*d*) orthogonale à la direction (*l*) de la liaison fixe, et un second couple de ce type (12) pour la réception, **caractérisé en ce que** les polarisations d'une antenne polaire double (10a") de chaque couple (10, 12) d'antennes polaires doubles sont orientées de façon intermédiaire entre les polarisations de l'autre antenne polaire double (10b") du même couple respectif (10).

2. Appareil selon la revendication 1, dans lequel chaque antenne polaire double est agencée avec des polarisations orthogonales.

3. Appareil selon la revendication 2, dans lequel des décalages de polarisation entre les polarisations orthogonales des antennes de chaque couple sont dans la plage de 22,5° à 67,5°.

4. Appareil selon la revendication 3, dans lequel des décalages de polarisation entre les polarisations orthogonales des antennes de chaque couple sont dans la plage de 30° à 60°.

5. Appareil selon la revendication 4, dans lequel des décalages de polarisation entre les polarisations orthogonales des antennes de chaque couple sont de 45°.

6. Procédé pour des communications MIMO d'un bout à l'autre d'une liaison fixe sans fil, dans lequel un premier couple (10) d'antennes polaires doubles, espacées (*d*) dans une direction orthogonale à la direction (*l*) de la liaison fixe, est utilisé pour l'émission, et un second couple de ce type (12) est utilisé pour la réception, **caractérisé en ce que** des polarisations d'une antenne polaire double (10a") de chaque couple (10, 12) d'antennes polaires doubles sont orientées de façon intermédiaire entre les polarisations de l'autre antenne polaire double (10b") du même couple respectif, le procédé comprenant les étapes de :

- émission de premier et deuxième signaux avec des première et deuxième polarisations provenant d'une première antenne polaire double (10a") du premier couple (10) ;
- émission de troisième et quatrième signaux avec des troisième et quatrième polarisations d'une seconde antenne polaire double (10b") du premier couple, de sorte que les troisième et quatrième polarisations sont orientées de façon intermédiaire entre les première et deuxième polarisations ; et les premier, deuxième, troisième et quatrième signaux ont une même fréquence ;
- réception de premier, deuxième, troisième et quatrième signaux dans le second couple (12) d'antennes polaires doubles ;

- séparation des premier, deuxième, troisième et quatrième signaux reçus, selon des caractéristiques de phase et de polarisation des signaux reçus ; et
- extraction de données en provenance des premier, deuxième, troisième et quatrième signaux.

7. Procédé selon la revendication 6, dans lequel chaque antenne polaire double est agencée avec des polarisations orthogonales, de sorte que les première et deuxième polarisations sont mutuellement orthogonales, et les troisième et quatrième polarisations sont mutuellement orthogonales.

8. Procédé selon la revendication 7, dans lequel des décalages de polarisation entre les polarisations orthogonales des antennes de chaque couple sont dans la plage de 22,5° à 67,5°.

9. Procédé selon la revendication 8, dans lequel des décalages de polarisation entre les polarisations orthogonales des antennes de chaque couple sont dans la plage de 30° à 60°.

10. Procédé selon la revendication 9, dans lequel des décalages de polarisation entre les polarisations orthogonales des antennes de chaque couple sont de 45°.

**Fig. 1**

**Fig. 2A**

**Fig. 2 B**

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7006804 B

### Non-patent literature cited in the description

- **P. Coulton ; C. Khirallah ; S. Qazi.** Increasing the Spectral Efficiency in Fixed Point-to-Point Microwave Radio System using Multiple Antenna Arrays. *IEE DSP Enabled Radio Colloquium,* September 2003
- **S. Calabro ; B. Lankl ; G. Sebald.** Multiple Co-Polar Co-Channel Point-to-Point Radio Transmission. *AEU Int. J. Electronics and Communications,* 2004, vol. 58, 51-57
- **S. Calabro ; B. Lankl ; G. Sebald.** Multiple Co-Polar Co-Channel-Point-to-Point Radio Transmission. *AEÜ Int. J. Electronics and Communications,* 2004, vol. 58, 51-57
- **E. Teletar.** Capacity of Multi-Antenna Gaussian Channels. *European Transactions on Telecommunications,* 1999, vol. 10, 585-595
- **N. Al-Dhahir ; A.H. Sayed.** The Finite-Length Multi-Input Multi-Output MMSE DFE. *IEEE Transactions on Signal Processing,* October 2000, vol. 48 (10), 2921-2935
- **G.D. Golden ; G.J. Foschini ; R.A. Valenzuela ; P.W. Wolniansky.** Detection Algorithm and Initial Laboratory Results using the V-BLAST Space-Time Communications Architecture. *Electronics Letters,* January 1999, vol. 35 (7), 14-15